# EUROPEAN PATENT APPLICATION

(11) **EP 4 693 617 A1**
(43) Date of publication of application: **11.02.2026**
(21) Application number: 24886228.6
(22) Date of filing: 30.10.2024
(51) Int. Cl.: H01M 10/6551, H01M 10/6556, H01M 50/262, H01M 50/342, H01M 50/502, H01M 10/613, H01M 50/211

(54) **BATTERY PACK AND MANUFACTURING METHOD THEREFOR**

(30) Priority: 03.11.2023 KR 20230150503; 23.10.2024 KR 20240145615
(71) Applicant: LG Energy Solution, Ltd., Seoul 07335 (KR)
(72) Inventor: LEE, Jae Hyun, Daejeon 34122 (KR)
(74) Representative: Plasseraud IP
(86) International application number: PCT/KR2024/016732
(87) International publication number: WO 2025/095555

(57) **Abstract**

The present technology provides a battery pack including a pack housing and a battery assembly in the pack housing, in which the battery assembly includes a thermal diffusion film attached to a bottom plate of the pack housing, a cell block including a plurality of battery cells staked in a first direction, and a thermally conductive resin layer configured to attach the cell block to the thermal diffusion film.

## Description

### [Technical Field]

The present invention relates to a battery pack and a manufacturing method thereof.

The present application claims the benefit of priority based on Korean Patent Application No. 10-2023-0150503, filed on November 3, 2023 and Korean Patent Application No. 10-2024-0145615, filed on October 23, 2024, and the entire contents of the Korean patent applications are incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable.

### [Disclosure]

### [Technical Problem]

The present invention is directed to providing a battery pack and a manufacturing method thereof.

### [Technical Solution]

An aspect of the present invention provides a battery pack including a pack housing and a battery assembly in the pack housing, in which the battery assembly includes a thermal diffusion film attached to a bottom plate of the pack housing, a cell block including a plurality of battery cells, and a thermally conductive resin layer configured to attach the cell block to the thermal diffusion film.

In example embodiments, the bottom plate may include a cooling channel configured to allow a cooling fluid to flow therethrough.

In example embodiments, the thermally conductive resin layer may be in direct contact with the plurality of battery cells.

In example embodiments, the thermally conductive resin layer may not be in contact with the bottom plate.

In example embodiments, the thermally conductive resin layer may include a thermosetting resin.

In example embodiments, the battery pack may further include an adhesive layer configured to attach the thermal diffusion film to the bottom plate, and an upper surface of the thermal diffusion film may be in contact with the thermally conductive resin layer and a lower surface thereof may be in contact with the adhesive layer.

In example embodiments, adhesive strength between the thermal diffusion film and the bottom plate may be lower than adhesive strength between the thermal diffusion film and the cell block.

In example embodiments, the bottom plate may be provided with a groove for accommodation of the adhesive layer.

In example embodiments, the plurality of battery cells may be arranged in a first direction, and the battery assembly may further include a fastening frame configured to be connected to one end of the cell block in the first direction and fastened to the pack housing.

In example embodiments, the battery pack may further include a venting plate covering the cell block and including a venting part configured to discharge a gas.

In example embodiments, the plurality of battery cells may be arranged in a first direction and extend in a second direction perpendicular to the first direction, and the battery assembly may further include a bus bar electrically connected to at least one of the plurality of battery cells.

In example embodiments, the thermal diffusion film may include a plurality of unit films, and each of the plurality of unit films of the thermal diffusion film may provide a space for accommodation of corresponding battery cells among the plurality of battery cells.

In example embodiments, the thermally conductive resin layer may include a first sub-thermally conductive resin layer configured to attach a first region of the cell block to the thermal diffusion film, and a second sub-thermally conductive resin layer configured to attach a second region of the cell block to the thermal diffusion film, thermal conductivity of the first sub-thermally conductive resin layer may be higher than thermal conductivity of the second sub-thermally conductive resin layer, and adhesive strength of the first sub-thermally conductive resin layer may be lower than adhesive strength of the second sub-thermally conductive resin layer.

In example embodiments, each of the plurality of battery cells may include a first outer part, a second outer part, and a central part between the first and second outer parts, the first sub-thermally conductive resin layer may be in contact with the first and second outer parts of each of the plurality of battery cells, and the second sub-thermally conductive resin layer may be in contact with the central part of each of the plurality of battery cells.

An aspect of the present invention provides a manufacturing method of a battery pack, including: applying a thermally conductive resin on an upper surface of a thermal diffusion film; forming a battery assembly by attaching a cell block including a plurality of battery cells to the upper surface of the thermal diffusion film, in which the battery assembly includes the cell block, the thermal diffusion film, and the thermally conductive resin; applying an adhesive layer to a bottom plate of a pack housing; and attaching the thermal diffusion film to the bottom plate using the adhesive layer.

In example embodiments, the forming of the battery assembly may include attaching the cell block to the upper surface of the thermal diffusion film and applying heat to the thermally conductive resin to cure the thermally conductive resin.

In example embodiments, the thermal diffusion film may cover a lower surface of the cell block facing an upper surface of the bottom plate, the thermally conductive resin may be in direct contact with the plurality of battery cells and is not in contact with the bottom plate, the thermal diffusion film may be attached to the bottom plate via an adhesive layer locally applied to the upper surface of the bottom plate, and adhesive strength between the thermal diffusion film and the bottom plate may be lower than adhesive strength between the thermal diffusion film and the cell block.

In example embodiments, the manufacturing method may further include separating the battery assembly from the bottom plate, and attaching a new battery assembly to the bottom plate.

In example embodiments, the plurality of battery cells may be arranged in the cell block in a first direction, the battery assembly may further include a fastening frame provided on one end of the cell block in the first direction and configured to be fastened to the pack housing, the manufacturing method may further include fastening the fastening frame to the pack housing using a fastening member after the attaching of the battery assembly to the bottom plate, and the separating of the battery assembly from the bottom plate may include unfastening the fastening frame from the pack housing.

### [Advantageous Effects]

According to example embodiments of the present invention, a battery assembly may have a cell-to-pack structure assembled directly with a pack housing of a battery pack. Battery cells can be thermally coupled to a bottom plate of the pack housing equipped with a cooling function using a thermally conductive resin layer and a thermal diffusion film to effectively control heat generation of the battery cells, thereby improving safety and reliability of the battery pack.

According to example embodiments of the present invention, a cell block is attached to the bottom plate through a thermal diffusion film and thus the battery assembly that is a cell-to-pack unit can be separated from the pack housing without causing damage to the battery cells. In the battery pack, replacement work can be performed in cell--to-pack units to reduce costs.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery assembly according to example embodiments of the present invention.
FIG. 2 is a cross-sectional view of a battery assembly according to example embodiments of the present invention.
FIG. 3 is a cross-sectional view of a battery pack according to example embodiments of the present invention.
FIG. 4 is an enlarged view of an area indicated by "EX1" of FIG. 3.
FIGS. 5A to 5F are diagrams illustrating a manufacturing method of a battery pack according to example embodiments of the present invention.
FIGS. 6A and 6B are cross-sectional views illustrating a manufacturing method of a battery pack according to example embodiments of the present invention.
FIG. 7 is a cross-sectional view of a battery assembly according to example embodiments of the present invention.
FIG. 8 is a cross-sectional view of a battery assembly according to example embodiments of the present invention.
FIG. 9 is a cross-sectional view of a battery pack according to example embodiments of the present invention.
FIG. 10 is a cross-sectional view of a battery pack according to example embodiments of the present invention.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

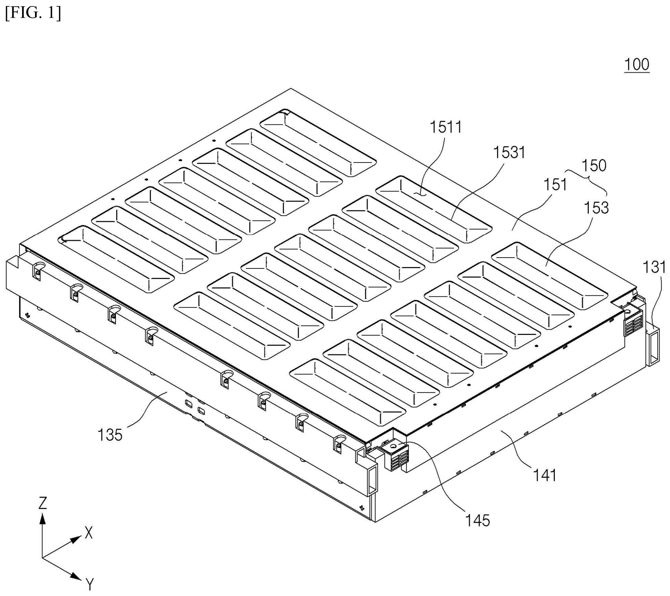

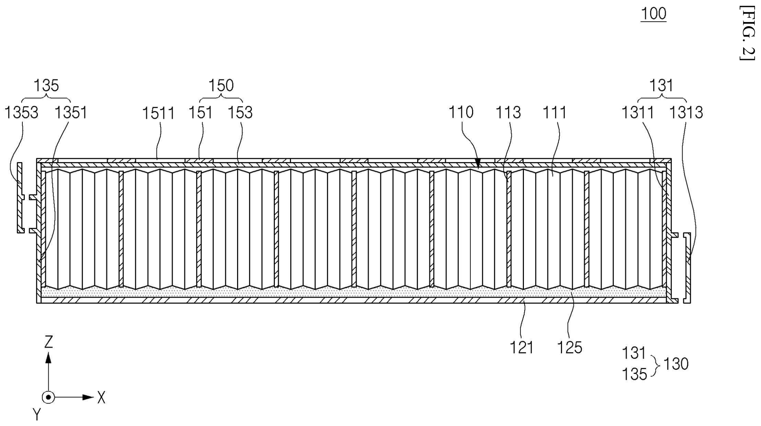

FIG. 1 is a perspective view of a battery assembly 100 according to example embodiments of the present invention. FIG. 2 is a cross-sectional view of the battery assembly 100 according to example embodiments of the present invention.

Referring to FIGS. 1 and 2, the battery assembly 100 may include a cell block 110, a thermal diffusion film 121, a thermally conductive resin layer 125, a fastening frame 130, and a venting plate 150.

The cell block 110 may include a plurality of battery cells 111. Each of the battery cells 111 is a basic unit of a lithium ion battery, i.e., a secondary battery. Each of the battery cells 111 may include an electrode assembly, an electrolyte, and a cell case. The electrode assembly in the cell case may include a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

The plurality of battery cells 111 may be connected in series and/or in parallel. For example, the plurality of battery cells 111 may be connected to each other in series. For example, the plurality of battery cells 111 may be connected to each other in parallel. For example, when a set of two or more battery cells 111 connected in parallel is defined as a bank, one bank including two or more battery cells 111 connected in parallel and another bank including two or more battery cells 111 connected in parallel may be connected in series.

Each of the battery cells 111 may be a pouch type battery cell, a cylindrical battery cell, or a prismatic battery cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

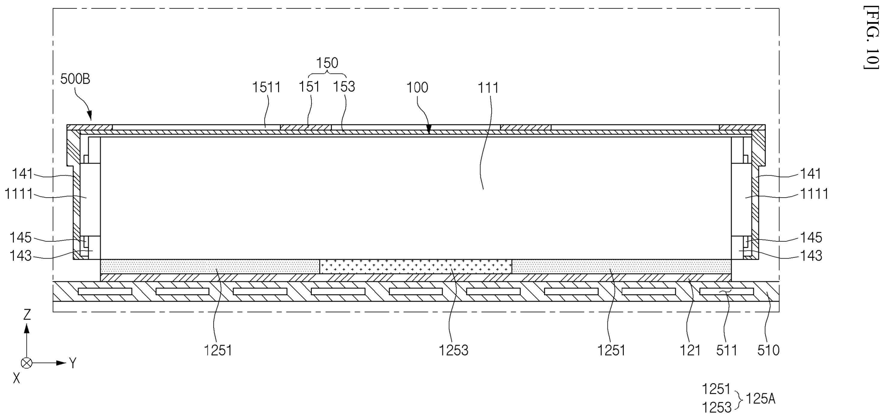

In example embodiments, the cell block 110 may include a plurality of battery cells 111 stacked on each other in a first horizontal direction (e.g., an X-axis direction). In the cell block 110, adjacent battery cells 111 among the plurality of battery cells 111 may be fixed to each other through an adhesive member such as an adhesive tape. For example, each of the plurality of battery cells 111 may be a pouch type battery cell having a length in the first horizontal direction (e.g., the X-axis direction) less than a length thereof in a second horizontal direction (e.g., a Y-axis direction). Each of the battery cells 111 may extend in the second horizontal direction (e.g., the Y-axis direction), and an electrode lead 1111 (see FIG. 10) may be provided on at least one of opposite ends of each of the battery cells 111 in the second horizontal direction (e.g., the Y-axis direction).

The cell block 110 may include pads 113 attached to side surfaces of some of the plurality of battery cells 111. Each of the pads 113 may be attached to a corresponding battery cell 111 through an adhesive member such as an adhesive tape. The pad 113 may be disposed between adjacent battery cells 111 in the first horizontal direction (e.g., the X-axis direction) among the plurality of battery cells 111. The adjacent battery cells 111 may be spaced apart from each other in the first horizontal direction (e.g., the X-axis direction) with the pad 113 therebetween. The pad 113 may be disposed between the battery cells 111 and configured to support the battery cells 111. In example embodiments, the pad 113 may be configured to thermally separate adjacent battery cells 111.

When viewed in a plan view, the cell block 110 may have a rectangular shape. The cell block 110 may include an upper surface and a lower surface that are opposite to each other in a vertical direction (e.g., a Z-axis direction), two side surfaces (i.e., a first side surface and a second side surface) that are opposite to each other in the first horizontal direction (e.g., the X-axis direction), and a front surface and a rear surface that are opposite to each other in the second horizontal direction (e.g., the Y-axis direction). The upper surface of the cell block 110 may include upper surfaces of the plurality of battery cells 111, and the lower surface of the cell block 110 may include lower surfaces of the plurality of battery cells 111.

Bus bars 145 and a bus bar frame 143 (see FIG. 10) supporting the electrode leads 1111 of the plurality of battery cells 111 may be on each of the front surface and the rear surface of the cell block 110. Each of the bus bar frames 143 on the front and rear surfaces of the cell block 110 may include slits into which the electrode leads 1111 are inserted. In addition, each of the bus bar frames 143 on the front and rear surfaces of the cell block 110 may support at least one bus bar 145 connected to at least one of the electrode leads 1111. Insulation covers 141 each covering the bus bar frames 143 may be on opposite ends of the battery assembly 100 in the second horizontal direction (e.g., the Y-axis direction).

Each of the bus bars 145 may be connected to an end of a corresponding battery cell 111 in the second horizontal direction (e.g., the Y-axis direction) among the plurality of battery cells 111. The bus bars 145 may be electrically and physically connected to at least one of the electrode leads 1111 of the plurality of battery cells 111. The bus bar 145 may be coupled to at least one of the electrode leads 1111 of the plurality of battery cells 111 by welding. The bus bar 145 may include a terminal-busbar for electrically connecting the cell block 110 of the battery assembly 100 to a cell block 110 of another battery assembly 100 or an external electrical device. In example embodiments, the bus bars 145 may include inter-bus bars connected to electrode leads 1111 of different battery cells 111 to electrically connect the different battery cells 111.

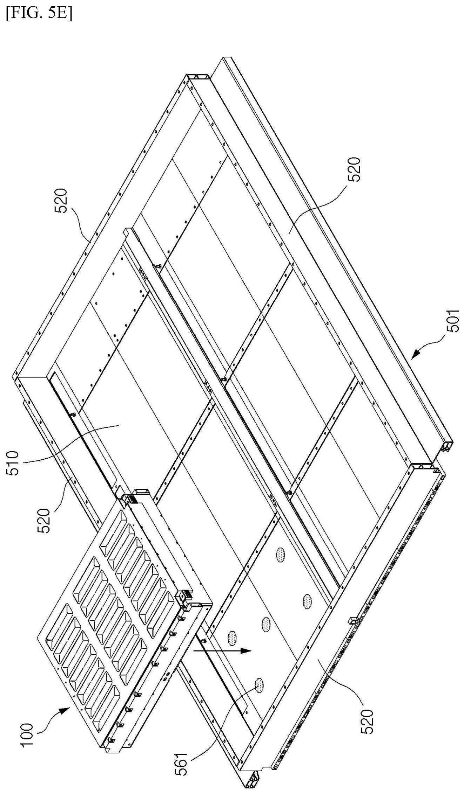

The thermal diffusion film 121 may be attached to the lower surface of the cell block 110. The thermal diffusion film 121 may be configured to thermally couple the cell block 110 and a pack housing 501 of FIG. 5E on which the battery assembly 100 is mounted.

The thermal diffusion film 121 may cover the lower surface of the cell block 110 and have a generally uniform thickness. For example, the thickness of the thermal diffusion film 121 may be in a range of several to hundreds of micrometers (µm). In example embodiments, the thickness of the thermal diffusion film 121 may be about 5 µm to about 30 µm, about 10 µm to about 25 µm, or about 15 µm to about 20 µm.

The thermal diffusion film 121 may have high thermal conductivity and be an electrically non-conductor. In example embodiments, the thermal conductivity of the thermal diffusion film 121 may be 500 W/(m·K) or more, 600 W/(m·K) or more, 700 W/(m·K) or more, 800 W/(m·K) or more, 900 W/(m·K) more, 1000 W/(m·K) or more, 1100 W/(m·K) or more, 1200 W/(m·K) or more, 1300 W/(m·K) or more, 1400 W/(m·K) or more,1500 W/(m·K) or more, 1600 W/(m·K) or more, 1700 W/(m·K) or more, 1800 W/(m·K) or more, 1900 W/(m·K) or more, or 2000 W/(m·K) or more. In example embodiments, the thermal conductivity of the thermal diffusion film 121 may be in a range of about 1500 W/(m·K) to about 2300 W/(m·K), a range of about 1600 W/(m·K) to about 2200 W/(m·K), a range of about 1700 W/(m·K) to about 2100 W/(m·K), or a range of about 1800 W/(m·K) to about 2000 W/(m·K). The thermal conductivity of the thermal diffusion film 121 may be higher than that of the thermally conductive resin layer 125.

The thermally conductive resin layer 125 may be interposed between the thermal diffusion film 121 and the lower surface of the cell block 110 and allow the cell block 110 to be attached to the thermal diffusion film 121. The thermally conductive resin layer 125 may entirely or partially fill a space between the thermal diffusion film 121 and the lower surface of the cell block 110. The thermally conductive resin layer 125 may thermally couple the thermal diffusion film 121 to the cell block 110. For example, the thermally conductive resin layer 125 may include a resin layer and a thermally conductive filler contained in the resin layer.

The thermally conductive resin layer 125 may be in contact with the lower surface of the cell block 110. The thermally conductive resin layer 125 may be in direct contact with the lower surfaces of the plurality of battery cells 111 and extend along the lower surfaces of the plurality of battery cells 111.

In example embodiments, the thermally conductive resin layer 125 may include a thermosetting resin. In this case, the thermally conductive resin layer 125 may be formed by applying the thermosetting resin on an upper surface of the thermal diffusion film 121, placing the cell block 110 on the thermal diffusion film 121, and applying heat to the thermosetting resin to cure the thermosetting resin.

The fastening frame 130 may be attached to each of outermost battery cells 111 in the first horizontal direction (e.g., the X-axis direction) among the plurality of battery cells 111. The fastening frame 130 may be fastened to the pack housing 501 through a fastening member 551 such as a bolt. For example, the battery assembly 100 may be mounted in the pack housing 501 by a side mounting method through the fastening frame 130.

The fastening frame 130 may include a first fastening frame 131 and a second fastening frame 135 spaced apart from each other with the cell block 110 therebetween. The first fastening frame 131 may be connected to one end of the cell block 110 in the first horizontal direction (e.g., the X-axis direction), and the second fastening frame 135 may be connected to the other end of the cell block 110 in the first horizontal direction (e.g., the X-axis direction). The first fastening frame 131 may include a first fixing plate 1311 attached to the one end of the cell block 110 in the first horizontal direction (e.g., the X-axis direction) through an adhesive member such as an adhesive tape, and a first flange 1313 fastened to the pack housing 501 through the fastening member 551. The first fixing plate 1311 may have a flat plate shape covering one side surface of the cell block 110, and the first flange 1313 may be connected to a lower part of the first fixing plate 1311. The second fastening frame 135 may include a second fixing plate 1351 attached to the other end of the cell block 110 in the first horizontal direction (e.g., the X-axis direction) through an adhesive member such as an adhesive tape, and a second flange 1353 fastened to the pack housing 501 through the fastening member 551. The second fixing plate 1351 may have a flat plate shape covering one side surface of the cell block 110, and the second flange 1353 may be connected to an upper part of the second fixing plate 1351.

The venting plate 150 may be provided on the cell block 110 and cover the upper surface of the cell block 110. The venting plate 150 may include a plurality of venting parts 1531 configured to discharge a gas. The venting plate 150 may include a support frame 151 with a plurality of openings 1511, and a cover sheet 153 attached to the support frame 151. The cover sheet 153 may cover the upper surfaces of the plurality of battery cells 111. The cover sheet 153 may include a heat-resistant sheet, a fire-resistant sheet, or a combination thereof. The cover sheet 153 may include venting parts 1531 each configured to discharge a gas to one of regions corresponding to the plurality of openings 1511 of the support frame 151. The venting parts 1531 may be cuts or cutting lines formed in the cover sheet 153. A high-temperature gas generated from the plurality of battery cells 111 may be discharged to an external space above the battery assembly 100 through the venting parts 1531 of the cover sheet 153.

### (Second Embodiment)

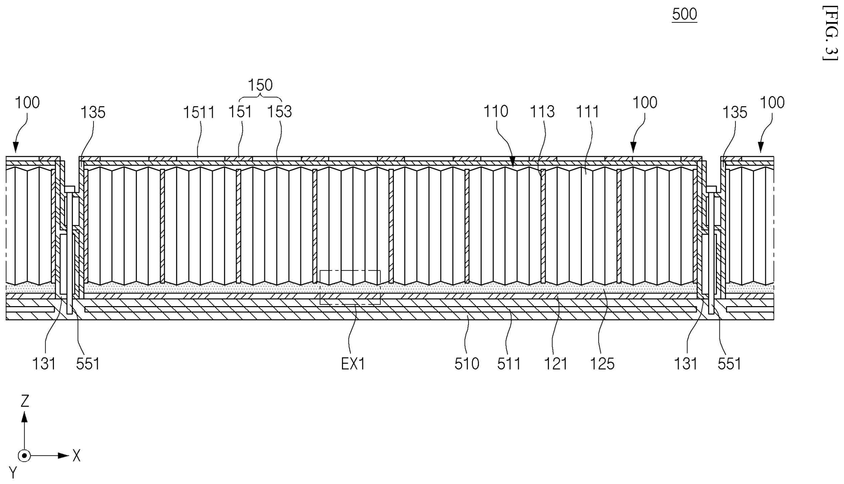

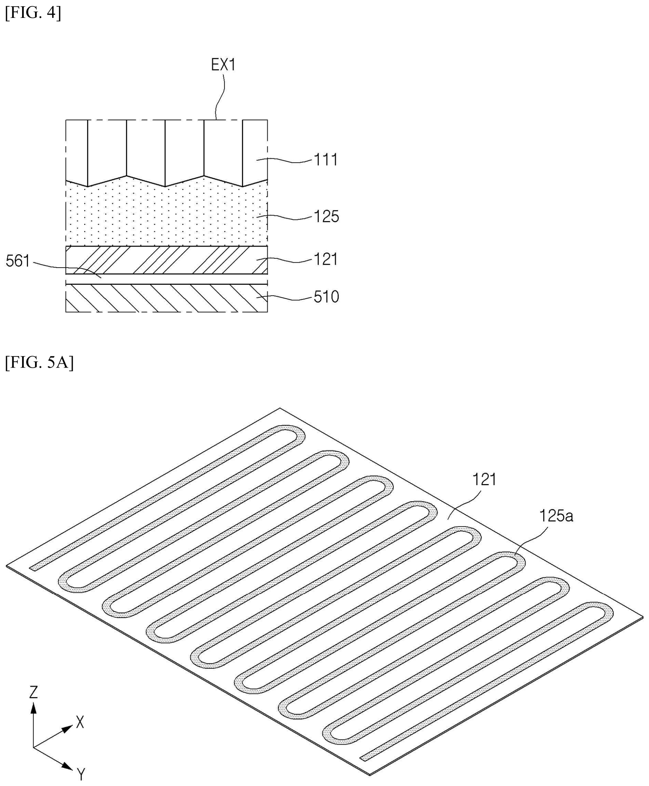

FIG. 3 is a cross-sectional view of a battery pack 500 according to example embodiments of the present invention. FIG. 4 is an enlarged view of an area indicated by "EX1" of FIG. 3.

Referring to FIGS. 1, 2, 3 and 4, the battery pack 500 may include the pack housing 501 of FIG. 5E, and a battery assembly 100 mounted in the pack housing 501. The battery pack 500 may include one or more battery assemblies 100 in the pack housing 501. In example embodiments, a plurality of battery assemblies 100 may be accommodated in an accommodation space provided by the pack housing 501 and arranged in the accommodation space of the pack housing 501 in the first horizontal direction (e.g., the X-axis direction) and/or the second horizontal direction (e.g., the Y-axis direction).

The pack housing 501 may include the bottom plate 510 and side walls 520 of FIG. 5E connected to edges of the bottom plate 510. The side walls 520 may extend along the edges of the bottom plate 510 to surround the accommodation space of the pack housing 501. The pack housing 501 may further include a pack lid connected to the side walls 520 of the pack housing 501 to cover the accommodation space. The accommodation space of the pack housing 501 may be a sealed space.

The bottom plate 510 may have a flat plate shape extending in the first horizontal direction (e.g., the X-axis direction) and the second horizontal direction (e.g., the Y-axis direction). The bottom plate 510 may support one or more battery assemblies 100.

The bottom plate 510 may include a cooling channel 511 configured to allow a cooling fluid to flow therethrough, and be configured to cool the battery assemblies 100. A cooling fluid from the outside of the battery pack 500 may be supplied to an inlet of the cooling channel 511, flow along the cooling channel 511, and be discharged to the outside through an outlet of the cooling channel 511. While the cooling fluid flows along the cooling channel 511, the plurality of battery cells 111 of the battery assembly 100 may be cooled. The cooling fluid may include a coolant and/or a refrigerant. In example embodiments, the bottom plate 510 may be formed by an extrusion process.

The battery assembly 100 may be attached to the bottom plate 510 by an adhesive layer 561 between a lower surface of a thermal diffusion film 121 and an upper surface of the bottom plate 510. For example, when the battery assembly 100 is assembled with the pack housing 501, the adhesive layer 561 may be applied on the upper surface of the bottom plate 510 and thereafter the battery assembly 100 may be attached to the upper surface of the bottom plate 510 using the adhesive layer 561. The bottom surface of the thermal diffusion film 121 may be attached to the upper surface of the bottom plate 510 by the adhesive layer 561. When the battery assembly 100 is attached to the bottom plate 510, a thermally conductive resin layer 125 may be spaced apart from the bottom plate 510 with the thermal diffusion film 121 therebetween and may not be in direct contact with the bottom plate 510. The adhesive layer 561 may include a resin layer and a heat dissipation filler contained in the resin layer.

In example embodiments, the adhesive layer 561 may be locally applied to the upper surface of the bottom plate 510. In example embodiments, the adhesive layer 561 may be applied in the form of a spot on a plurality of regions of the upper surface of the bottom plate 510. In example embodiments, a total contact area between the adhesive layer 561 and the thermal diffusion film 121 may be less than a total contact area between the thermally conductive resin layer 125 and the thermal diffusion film 121. In example embodiments, a thickness of the adhesive layer 561 may be less than a thickness of the thermally conductive resin layer 125.

In example embodiments, adhesive strength between the thermal diffusion film 121 and the bottom plate 510 by the adhesive layer 561 may be lower than adhesive strength between the thermal diffusion film 121 and the cell block 110 by the thermally conductive resin layer 125. The type of the adhesive layer 561, an application area of the adhesive layer 561, and the like may be adjusted so that the adhesive strength between the thermal diffusion film 121 and the bottom plate 510 by the adhesive layer 561 may be lower than the adhesive strength between the thermal diffusion film 121 and the cell block 110 by the thermally conductive resin layer 125. By setting the adhesive strength between the thermal diffusion film 121 and the bottom plate 510 by the adhesive layer 561 to be lower than the adhesive strength between the thermal diffusion film 121 and the cell block 110 by the thermally conductive resin layer 125, the thermal diffusion film 121 may be easily removed from the pack housing 501 together with the cell block 110 when the battery assembly 100 is separated or disassembled from the pack housing 501 to replace the battery assembly 100 with another.

The battery assembly 100 may be fixed to the bottom plate 510 by a fastening member 551 such as a bolt. The battery assembly 100 may be fastened to the bottom plate 510 by fastening a first fastening frame 131 and a second fastening frame 135 of the battery assembly 100 to the bottom plate 510 by fastening members 551. The fastening members 551 may be fastened to the bottom plate 510 not to interfere with the cooling channel 511 of the bottom plate 510.

In example embodiments, a second fastening frame 135 of one of adjacent battery assemblies 100 in the first horizontal direction (e.g., the X-axis direction) may be fastened to a first fastening frame 131 of the other of the adjacent battery assemblies 100. More specifically, the second flange 1353 of the second fastening frame 135 of one of the adjacent battery assemblies 100 may be seated on the first flange 1313 of the first fastening frame 131 of the other of the adjacent battery assemblies 100, and fastened to the first flange 1313 of the first fastening frame 131 of the other battery assembly 100 via the fastening member 551. The adjacent battery assemblies 100 may be fastened to each other by fastening the second fastening frame 135 of one of the adjacent battery assemblies 100 to the first fastening frame 131 of the other of the adjacent battery assemblies 100.

### (Third Embodiment)

FIGS. 5A to 5F are diagrams illustrating a manufacturing method of a battery pack 500 according to example embodiments of the present invention. Hereinafter, referring to FIGS. 1 to 4 and 5A to 5F, a method of assembling a battery assembly 100 to the pack housing 501 will be described.

Referring to FIG. 5A, a thermal diffusion film 121 is prepared, and a thermally conductive resin 125a is applied onto the thermal diffusion film 121.

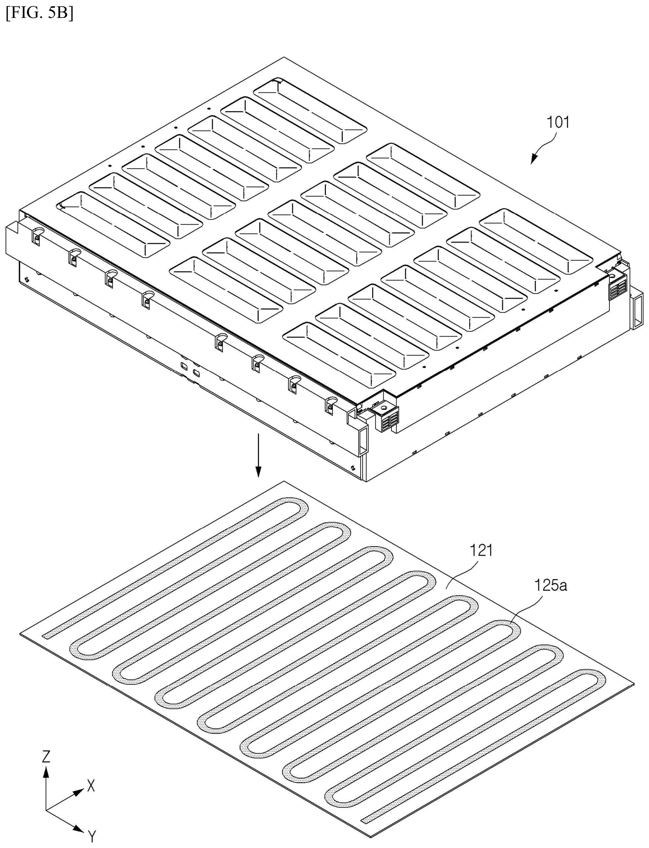

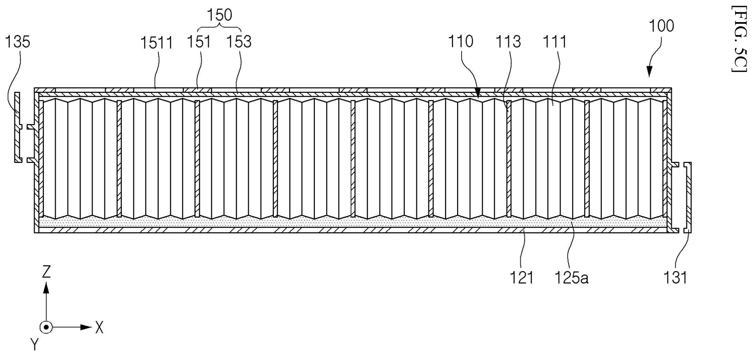

Referring to FIGS. 5B and 5C, a structure 101 including a cell block 110 is prepared and attached to the thermal diffusion film 121. The structure 101 may include the cell block 110, first and second fastening frames 131 and 135, and a venting plate 150. The structure 101 may be temporarily bonded to the thermal diffusion film 121 by a thermally conductive resin 125a.

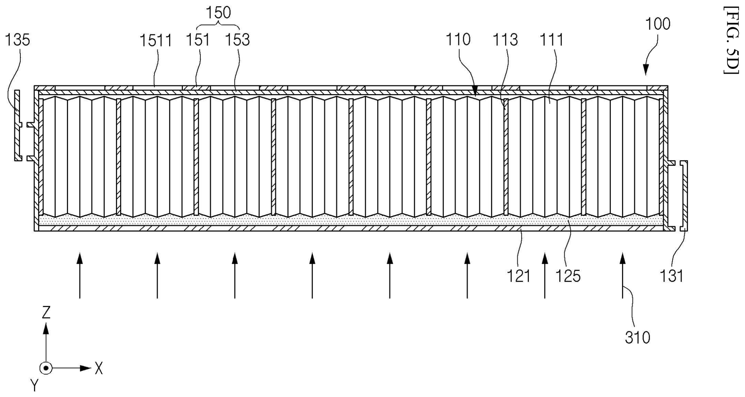

Referring to FIG. 5D, heat 310 may be applied to the thermally conductive resin 125a to cure the thermally conductive resin 125a. As the thermally conductive resin 125a is cured, the cell block 110 may be firmly attached to the thermal diffusion film 121. The thermally conductive resin 125a may be cured to form a thermally conductive resin layer 125. The cell block 110, the first and second fastening frames 131 and 135, the venting plate 150, the thermally conductive resin layer 125, and the thermal diffusion film 121 may form the battery assembly 100 together.

Referring to FIG. 5E, an adhesive layer 561 is applied onto a mounting region of an upper surface of a bottom plate 510. The adhesive layer 561 may be locally applied onto one mounting region of an upper surface of the bottom plate 510. FIG. 5E illustrates that the adhesive layer 561 is applied onto the bottom plate 510, but in some embodiments, the adhesive layer 561 may be applied onto a bottom surface of the thermal diffusion film 121.

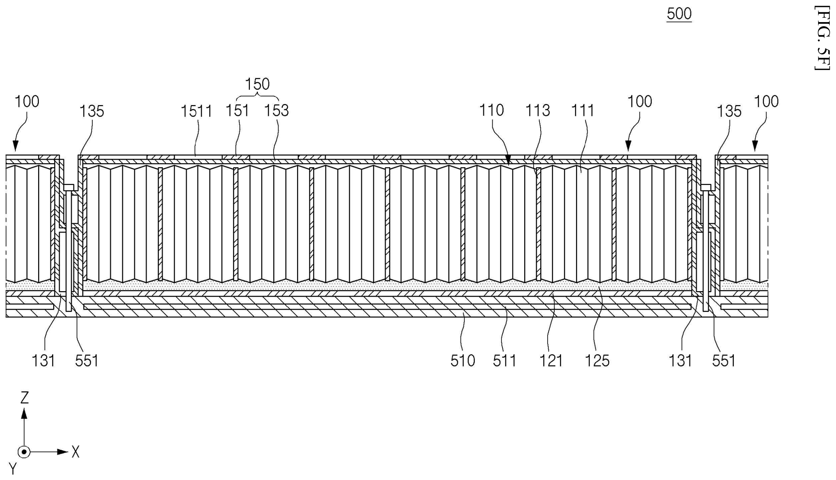

Referring to FIG. 5F, the battery assembly 100 is attached to one mounting region of the upper surface of the bottom plate 510. The battery assembly 100 may be attached to the bottom plate 510 by the adhesive layer 561 applied onto the upper surface of the bottom plate 510.

Thereafter, the adhesive layer 561 may be applied onto remaining mounting regions of the upper surface of the bottom plate 510, and battery assemblies 100 may be attached to the remaining mounting regions of the upper surface of the bottom plate 510.

Next, the battery assemblies 100 may be fastened to the bottom plate 510 via fastening members 551. The first and second fastening frames 131 and 135 of each of the battery assemblies 100 may be fastened to the bottom plate 510 by fastening members 551. The second fastening frame 135 of one of adjacent battery assemblies 100 in the first horizontal direction (e.g., the X-axis direction) may be fastened to the first fastening frame 131 of the other of the adjacent battery assemblies 100. The adjacent battery assemblies 100 may be coupled to each other by fastening the second fastening frame 135 of one of the adjacent battery assemblies 100 to the first fastening frame 131 of the other of the adjacent battery assemblies 100.

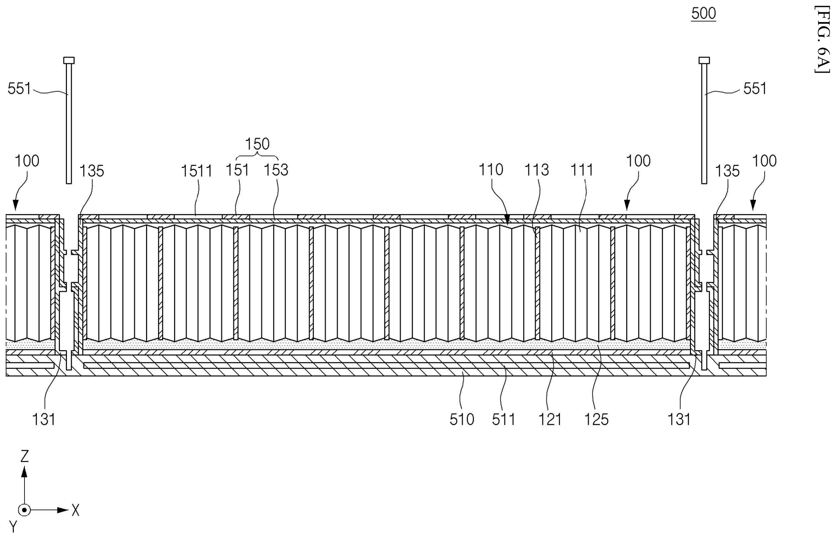

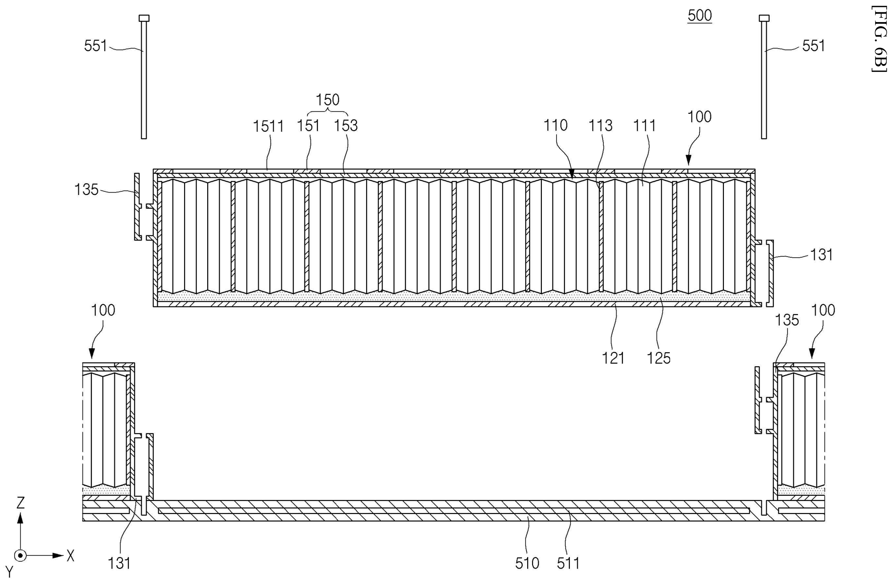

FIGS. 6A and 6B are cross-sectional views illustrating a manufacturing method of a battery pack 500 according to example embodiments of the present invention.

Hereinafter, a method of replacing a battery assembly 100 in the battery pack 500 with another will be described with reference to FIGS. 1 to 4, 6A and 6B.

Referring to FIG. 6A, the replacing of the battery assembly 100 with another may include separating a defective battery assembly 100 from the pack housing 501. The separating of the battery assembly 100 from the pack housing 501 may include unfastening the defective battery assembly 100 from the pack housing 501. In order to unfasten the defective battery assembly 100 from the bottom plate 510, the fastening members 551 may be separated from the first and second fastening frames 131 and 135 of the defective battery assembly 100.

Referring to FIG. 6B, the separating of the battery assembly 100 from the pack housing 501 may include lifting the battery assembly 100 upward to separate the thermal diffusion film 121 from the bottom plate 510. For example, after a lifting mechanism is attached to the defective battery assembly 100, the battery assembly 100 may be lifted by the lifting mechanism to separate the defective battery assembly 100 from the pack housing 501.

In example embodiments, adhesive strength between the thermal diffusion film 121 and the bottom plate 510 by the adhesive layer 561 may be set to be lower than adhesive strength between the thermal diffusion film 121 and the cell block 110 by the thermally conductive resin layer 125. In this case, when the defective battery assembly 100 is lifted to be separated from the bottom plate 510, the thermal diffusion film 121 may be easily separated from the bottom plate 510, together with the cell block 110.

After the defective battery assembly 100 is separated from the pack housing 501, a new battery assembly 100 may be assembled with a mounting region of the bottom plate 510 exposed due to the removal of the defective battery assembly 100. The new battery assembly 100 may be assembled with the pack housing 501 in substantially the same manner as the method of assembling the battery assembly 100 described above with reference to FIGS. 5A to 5F.

According to example embodiments of the present invention, the battery assembly 100 may have a cell-to-pack structure directly assembled with the pack housing 501 of the battery pack 500. The battery cells 111 are thermally coupled to the bottom plate 510 of the pack housing 501 equipped with a cooling function through the thermally conductive resin layer 125 and the thermal diffusion film 121 without an intermediate frame to effectively heat generation of the battery cells 111, thereby improving the safety and reliability of the battery pack 500.

In the case of a general battery pack, particularly, a battery pack in which a cell-to-pack unit with battery cells is fastened to a pack housing, the battery cells are directly attached to the pack housing through a resin layer. In this case, when the battery cells are separated from the pack housing, the battery cells may be damaged, e.g., the battery cells may be torn, and thus, replacement work performed in units, e.g., replacing the cell-to-pack unit with another cell-to-pack unit, is not allowed and replacement work can be performed only in units of packs.

According to example embodiments of the present invention, the cell block 110 is attached to the bottom plate 510 through the thermal diffusion film 121 and thus the battery assembly 100 corresponding to a cell-to-pack unit can be separated from the pack housing 501 without causing damage to the battery cells 111. In the battery pack 500, replacement work can be performed in cell--to-pack units to reduce costs.

### (Fourth Embodiment)

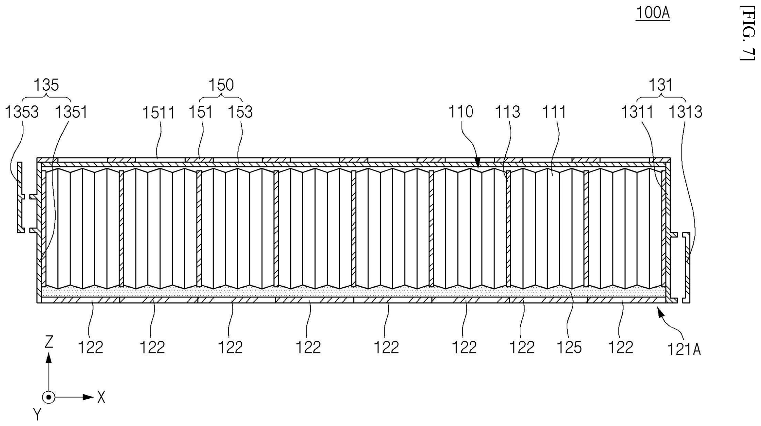

FIG. 7 is a cross-sectional view of a battery assembly 100A according to example embodiments of the present invention. Hereinafter, the battery assembly 100A of FIG. 7 will be described focusing on differences from the battery assembly 100 described above with reference to FIGS. 1 and 2.

Referring to FIG. 7, in the battery assembly 100A, a thermal diffusion film 121A may include a plurality of unit films 122. The plurality of unit films 122 may be separated from each other. The plurality of unit films 122 may be arranged in the first horizontal direction (e.g., the X-axis direction). Each of the plurality of unit films 122 may overlap corresponding battery cells 111 in the vertical direction (e.g., the Z-axis direction) among a plurality of battery cells 111 and be attached to the corresponding battery cells 111 by a thermally conductive resin layer 125. Only some of the plurality of battery cells 111 can be removed when the battery assembly 100A is separated or disassembled from the pack housing 501. During replacing of only a battery cell 111 to be removed with another, a unit film 122 overlapping the battery cell 111 to be removed among the plurality of unit films 122 may also be removed.

### (Fifth Embodiment)

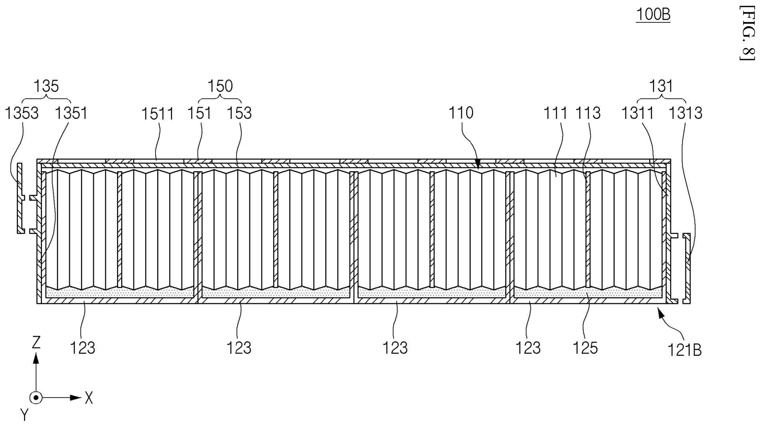

FIG. 8 is a cross-sectional view of a battery assembly 100B according to example embodiments of the present invention. Hereinafter, the battery assembly 100B of FIG. 8 will be described focusing on differences from the battery assembly 100 described above with reference to FIGS. 1 and 2.

Referring to FIG. 8, in the battery assembly 100B, a thermal diffusion film 121B may include a plurality of unit films 123. The plurality of unit films 123 may be separated from each other. The plurality of unit films 123 may be arranged in the first horizontal direction (e.g., the X-axis direction). Two adjacent unit films 123 in the first horizontal direction (e.g., the X-axis direction) may be in contact with each other. Each of the plurality of unit films 123 may accommodate corresponding battery cells 111 among a plurality of battery cells 111. Each of the unit films 123 may have a bent shape to provide a space for accommodating the corresponding battery cells 111 among the plurality of battery cells 111. Each of the unit films 123 may have a U-shape when viewed in a cross-sectional view. For example, each of the unit films 123 may include a bottom part facing bottoms of the corresponding battery cells 111 and a pair of side cover parts spaced apart from each other with the corresponding battery cells 111 interposed therebetween. One of the pair of side cover parts may be in contact with one side of each of the corresponding battery cells 111, and the other side cover part may be in contact with another side of each of the corresponding battery cells 111.

### (Sixth Embodiment)

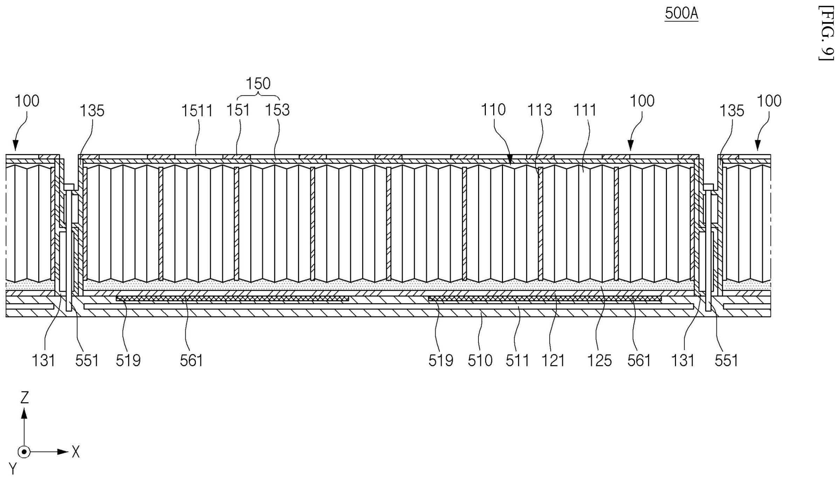

FIG. 9 is a cross-sectional view of a battery pack 500A according to example embodiments of the present invention. Hereinafter, the battery pack 500A of FIG. 9 will be described focusing on differences from the battery pack 500 described above with reference to FIGS. 3 and 4.

Referring to FIG. 9, in the battery pack 500A, a bottom plate 510 may include a groove 519 for accommodating an adhesive layer 561. The groove 519 of the bottom plate 510 may limit an application range of the adhesive layer 561. The groove 519 of the bottom plate 510 may have a rectangular or circular shape when viewed in a plan view. The adhesive layer 561 may entirely or partially fill the groove 519 of the bottom plate 510. A part of the adhesive layer 561 may overflow from the groove 519 of the bottom plate 510 and be applied to a surface of the bottom plate 510 near the groove 519 of the bottom plate 510. The bottom plate 510 may be provided with a plurality of grooves 519 spaced apart from each other, and the adhesive layer 561 may be provided in each of the plurality of grooves 519 of the bottom plate 510.

### (Seventh Embodiment)

FIG. 10 is a cross-sectional view of a battery pack 500B according to example embodiments of the present invention. Hereinafter, the battery pack 500B of FIG. 10 will be described focusing on differences from the battery pack 500 described above with reference to FIGS. 3 and 4.

Referring to FIG. 10, in the battery pack 500B, a thermally conductive resin layer 125A may include a plurality of sub-thermally conductive resin layers having different material compositions, different thermal conductivity, and/or different adhesive strength. The plurality of sub-thermally conductive resin layers of the thermally conductive resin layer 125A may be attached to different regions of the cell block 110. The plurality of sub-thermally conductive resin layers may each include a heat dissipation filler, and the amounts of the heat dissipation fillers in the plurality of sub-thermally conductive resin layers may be different from each other. The heat dissipation filler may include, for example, alumina, boron nitride, aluminum nitride, zinc oxide, magnesium oxide, or a combination thereof.

In example embodiments, the thermally conductive resin layer 125A may include a first sub-thermally conductive resin layer 1251 in contact with a first region of the cell block 110 and a second sub-thermally conductive resin layer 1253 in contact with a second region of the cell block 110. The first sub-thermally conductive resin layer 1251 may allow the first region of the cell block 110 to be attached to a thermal diffusion film 121, and the second sub-thermally conductive resin layer 1253 may allow the second region of the cell block 110 to be attached to the thermal diffusion film 121. The first sub-thermally conductive resin layer 1251 may allow parts of the plurality of battery cells 111 in the first region of the cell block 110 to be attached to the thermal diffusion film 121, and the second sub-thermally conductive resin layer 1253 may allow parts of the plurality of battery cells 111 in the second region of the cell block 110 to be attached to the thermal diffusion film 121.

The first sub-thermally conductive resin layer 1251 may have first thermal conductivity and first adhesive strength, and the second sub-thermally conductive resin layer 1253 may have second thermal conductivity and second adhesive strength. The first thermal conductivity of the first sub-thermally conductive resin layer 1251 may be higher than the second thermal conductivity of the second sub-thermally conductive resin layer 1253. The first adhesive strength of the first sub-thermally conductive resin layer 1251 may be lower than the second adhesive strength of the second sub-thermally conductive resin layer 1253. The first sub-thermally conductive resin layer 1251 having relatively high thermal conductivity may be attached to a part of the cell block 110 in which a relatively large amount of heat is generated, thereby enhancing the cooling of the cell block 110. The second sub-thermally conductive resin layer 1253 having relatively low thermal conductivity may be attached to a part of the cell block 110 in which a relatively small amount of heat is generated. A temperature deviation in the cell block 110 may decrease, because the first sub-thermally conductive resin layer 1251 is attached to the part of the cell block 110 in which a relatively large amount of heat is generated and the second sub-thermally conductive resin layer 1253 is attached to the part of the cell block 110 in which a relatively small amount of heat is generated. The second sub-thermally conductive resin layer 1253 having relatively high adhesive strength may be attached to a part of the cell block 110 that is relatively vulnerable to vibration, thereby enhancing structural safety of the cell block 110.

In example embodiments, the first thermal conductivity of the first sub-thermally conductive resin layer 1251 may be between about 3 W/(m·K) and about 10 W/(m·K), between about 4 W/(m·K) and about 9 W/(m·K), between about 5 W/(m·K) and about 8 W/(m·K), or between about 6 W/(m·K) and about 7 W/(m·K). In example embodiments, the second thermal conductivity of the second sub-thermally conductive resin layer 1253 may be between about 20% and about 80%, between about 30% and about 70%, or between about 40% and about 60% of the first thermal conductivity of the first sub-thermally conductive resin layer 1251.

In example embodiments, the second adhesive strength of the second sub-thermally conductive resin layer 1253 may be between about 1 MPa and about 5 MPa, between about 1.5 MPa and about 4.5 MPa, between about 2 MPa and about 4 MPa, or between about 2.5 MPa and about 3.5 MPa. In example embodiments, the first adhesive strength of the first sub-thermally conductive resin layer 1251 may be between about 10% and about 90%, between about 20% and about 80%, between about 30% and about 70%, or between about 40% and about 60% of the second adhesive strength of the second sub-thermally conductive resin layer 1253.

In example embodiments, each of the plurality of battery cells 111 may include a first part relatively adjacent to an electrode lead 1111 and a second part relatively distant from the electrode lead 1111. The first parts of the plurality of battery cells 111 may be in the first region of the cell block 110, and the second parts of the plurality of battery cells 111 may be in the second region of the cell block 110. The first sub-thermally conductive resin layer 1251 may be in contact with the first parts of the plurality of battery cells 111, and the second sub-thermally conductive resin layer 1253 may be in contact with the second parts of the plurality of battery cells 111. A relatively large amount of heat is generated in the first part of the battery cell 111 relatively adjacent to the electrode lead 1111 during operation of the battery cell 111, and a relatively small amount of heat is generated in the second part of the battery cell 111 relatively distant from the electrode lead 1111 during operation of the battery cell 111. The first sub-thermally conductive resin layer 1251 having relatively high thermal conductivity may be attached to the first part of each of the plurality of battery cells 111 to enhance the cooling of the plurality of battery cells 111. The second sub-thermally conductive resin layer 1253 having relatively low thermal conductivity may be attached to the second part of each of the plurality of battery cells 111. A temperature deviation in each of the plurality of battery cells 111 may decrease, because the first sub-thermally conductive resin layer 1251 is attached to the first part of each of the plurality of battery cells 111 and the second sub-thermally conductive resin layer 1253 is attached to the second part of each of the plurality of battery cells 111. The first part of each of the battery cells 111 is supported by a bus bar frame 143 and an insulation cover 141 and thus the structural safety thereof is relatively high, and the second part of each of the battery cells 111 is relatively distant from the bus bar frame 143 and the insulation cover 141 and thus the structural safety thereof is relatively low. The second sub-thermally conductive resin layer 1253 having relatively high adhesive strength may allow the second part of each of the plurality of battery cells 111 to be attached to the thermal diffusion film 121, thereby enhancing the structural safety of the plurality of battery cells 111.

In example embodiments, each of the plurality of battery cells 111 may include a first outer part connected to the electrode lead 1111, a second outer part connected to another electrode lead 1111, and a central part between the first outer part and the second outer part. The battery cell 111 may extend in the second horizontal direction (e.g., the Y-axis direction), and the central part of the battery cell 111 may be between the first outer part and the second outer part of the battery cell 111 in the second horizontal direction (e.g., the Y-axis direction). The first and second outer parts of each of the battery cells 111 may be in the first region of the cell block 110, and the central part thereof may be in the second region of the cell block 110.

The first sub-thermally conductive resin layer 1251 may be in contact with the first and second outer parts of each of the plurality of battery cells 111, and the second sub-thermally conductive resin layer 1253 may be in contact with the central part of each of the plurality of battery cells 111. A relatively large amount of heat is generated in the first and second outer parts of the battery cell 111 during operation of the battery cell 111 because the first and second outer parts are relatively close to the electrode lead 1111, and a relatively small amount of heat is generated in the central part of the battery cell 111 because the central part is relatively distant from the electrode lead 1111. The first sub-thermally conductive resin layer 1251 having relatively high thermal conductivity may be attached to the first and second outer parts of each of the plurality of battery cells 111 to enhance the cooling of the plurality of battery cells 111. The second sub-thermally conductive resin layer 1253 having relatively low thermal conductivity may be attached to the central part of each of the plurality of battery cells 111. A temperature deviation in each of the plurality of battery cells 111 may decrease, because the first sub-thermally conductive resin layer 1251 is attached to the first and second outer parts of each of the plurality of battery cells 111 and the second sub-thermally conductive resin layer 1253 is attached to the second part of each of the plurality of battery cells 111. A temperature deviation between regions of the battery cell 111 may be more effectively controlled by adjusting the dimension of the central part of the battery cell 111 in contact with the second sub-thermally conductive resin layer 1253. For example, a length of the central part of the battery cell 111 in contact with the second sub-thermally conductive resin layer 1253 in the second horizontal direction (e.g., the Y-axis direction) may be between about 10% and about 70%, between about 20% and about 60%, or between about 30% and about 50% of a length of the battery cell 111 in the second horizontal direction (e.g., the Y-axis direction).

The first and second outer parts of the battery cells 111 is supported by a bus bar frame 143 and an insulation cover 141 and thus the structural safety thereof is relatively high, and the central part of the battery cell 111 is relatively distant from the bus bar frame 143 and the insulation cover 141 and thus the structural safety thereof is relatively low. The second sub-thermally conductive resin layer 1253 having relatively high adhesive strength may allow the central part of each of the plurality of battery cells 111 to be attached to the thermal diffusion film 121, thereby enhancing the structural safety of the plurality of battery cells 111.

In the battery pack 500B according to example embodiments, a part of each of the battery cells 111 in which a relatively large amount of heat is generated may be attached to the thermal diffusion film 121 via a thermally conductive resin layer with relatively high thermal conductivity, and a part of each of the battery cells 111 that is relatively vulnerable to vibration may be attached to the thermal diffusion film 121 via a thermally conductive resin layer with relatively high adhesive strength. Therefore, temperature uniformity and structural safety of the battery cells 111 may improve, compared to when the battery cells 111 are attached to the thermal diffusion film 121 via a single adhesive layer.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a pack housing; and
a battery assembly in the pack housing,
wherein the battery assembly comprises:
a thermal diffusion film attached to a bottom plate of the pack housing;
a cell block including a plurality of battery cells; and
a thermally conductive resin layer configured to attach the cell block to the thermal diffusion film.

2. The battery pack of claim 1, wherein
the bottom plate comprises a cooling channel configured to allow a cooling fluid to flow therethrough.

3. The battery pack of claim 1, wherein
the thermally conductive resin layer is in direct contact with the plurality of battery cells.

4. The battery pack of claim 3, wherein
the thermally conductive resin layer is not in contact with the bottom plate.

5. The battery pack of claim 1, wherein
the thermally conductive resin layer comprises a thermosetting resin.

6. The battery pack of claim 1, further comprising
an adhesive layer configured to attach the thermal diffusion film to the bottom plate, wherein an upper surface of the thermal diffusion film is in contact with the thermally conductive resin layer and a lower surface of the thermal diffusion film is in contact with the adhesive layer.

7. The battery pack of claim 6, wherein
adhesive strength between the thermal diffusion film and the bottom plate is lower than adhesive strength between the thermal diffusion film and the cell block.

8. The battery pack of claim 6, wherein
the bottom plate is provided with a groove for accommodation of the adhesive layer.

9. The battery pack of claim 1, wherein
the plurality of battery cells are arranged in a first direction, and
the battery assembly further comprises a fastening frame configured to be connected to one end of the cell block in the first direction and fastened to the pack housing.

10. The battery pack of claim 1, further comprising
a venting plate covering the cell block and including a venting part configured to discharge a gas.

11. The battery pack of claim 1, wherein
the plurality of battery cells are arranged in a first direction,
each of the plurality of battery cells extends in a second direction perpendicular to the first direction, and
the battery assembly further comprises a bus bar electrically connected to at least one of the plurality of battery cells.

12. The battery pack of claim 1, wherein
the thermal diffusion film comprises a plurality of unit films,
wherein each of the plurality of unit films of the thermal diffusion film provides a space for accommodation of corresponding battery cells among the plurality of battery cells.

13. The battery pack of claim 1, wherein
the thermally conductive resin layer comprises:
a first sub-thermally conductive resin layer configured to attach a first region of the cell block to the thermal diffusion film; and
a second sub-thermally conductive resin layer configured to attach a second region of the cell block to the thermal diffusion film,
wherein thermal conductivity of the first sub-thermally conductive resin layer is higher than thermal conductivity of the second sub-thermally conductive resin layer, and
adhesive strength of the first sub-thermally conductive resin layer is lower than adhesive strength of the second sub-thermally conductive resin layer.

14. The battery pack of claim 13, wherein
each of the plurality of battery cells comprises a first outer part, a second outer part, and a central part between the first and second outer parts,
wherein the first sub-thermally conductive resin layer is in contact with the first and second outer parts of each of the plurality of battery cells, and
the second sub-thermally conductive resin layer is in contact with the central part of each of the plurality of battery cells.

15. A manufacturing method of a battery pack, comprising:
applying a thermally conductive resin on an upper surface of a thermal diffusion film;
forming a battery assembly by attaching a cell block including a plurality of battery cells to the upper surface of the thermal diffusion film, wherein the battery assembly includes the cell block, the thermal diffusion film and the thermally conductive resin;
applying an adhesive layer to a bottom plate of a pack housing; and
attaching the thermal diffusion film to the bottom plate using the adhesive layer.

16. The manufacturing method of claim 15, wherein
the forming of the battery assembly comprises attaching the cell block to the upper surface of the thermal diffusion film and applying heat to the thermally conductive resin to cure the thermally conductive resin.

17. The manufacturing method of claim 16, wherein
the thermal diffusion film covers a lower surface of the cell block facing an upper surface of the bottom plate,
the thermally conductive resin is in direct contact with the plurality of battery cells and is not in contact with the bottom plate,
the thermal diffusion film is attached to the bottom plate via an adhesive layer locally applied to the upper surface of the bottom plate, and
adhesive strength between the thermal diffusion film and the bottom plate is lower than adhesive strength between the thermal diffusion film and the cell block.

18. The manufacturing method of claim 15, further comprising:
separating the battery assembly from the bottom plate; and
attaching a new battery assembly to the bottom plate.

19. The manufacturing method of clam 18, wherein
the plurality of battery cells are arranged in the cell block in a first direction,
the battery assembly further comprises a fastening frame provided in one end of the cell block in the first direction and configured to be fastened to the pack housing,
the manufacturing method further comprises fastening the fastening frame to the pack housing using a fastening member after the attaching of the battery assembly to the bottom plate, and
the separating of the battery assembly from the bottom plate comprises unfastening the fastening frame from the pack housing.
